# EUROPÄISCHE PATENTSCHRIFT

(11) **EP 2 659 762 B1**
(45) Veröffentlichungstag und Bekanntmachung des Hinweises auf die Patenterteilung: **17.05.2017**
(21) Anmeldenummer: 13155027.9
(22) Anmeldetag: 13.02.2013
(51) Int. Cl.: A01D 90/04, A01F 15/10

(54) **Landwirtschaftliche Erntemaschine mit Schneidvorrichtung**
Agricultural harvester with a cutting device
Moissonneuse agricole avec dispositif de coupe

(30) Priorität: 04.05.2012 DE 102012009040
(43) Veröffentlichungstag der Anmeldung: 06.11.2013
(73) Patentinhaber: Usines Claas France S.A.S, 57140 Metz (FR)
(72) Erfinder: Hesselmann, Ulrich, 54439 Saarburg (DE); Scharf, Thorsten, 66693 Orscholz (DE); Birkhofer, Stefan, 78333 Stocknach (DE)
(74) Vertreter: Belda, Stefan Johannes

(56) Entgegenhaltungen:
- EP-A1- 0 689 760
- DE-A1-102005 040 711
- DE-A1-102005 050 172
- US-B1- 6 769 239

## Beschreibung

Die Erfindung betrifft eine landwirtschaftliche Erntemaschine, eine Ballenpresse oder einen Ladewagen mit einer Schneidvorrichtung.

Landwirtschaftliche Ballenpressen oder Ladewagen sind oftmals mit einer Schneidvorrichtung - auch "Schneidwerk" genannt - für der Maschine zugeführtes Halm- und/oder Blattgut (im Folgenden vereinfacht: "Erntegut") ausgestattet, um dieses zu unterschiedlichen Zwecken zu zerkleinern. Auch andere landwirtschaftliche Erntemaschinen können mit einer solchen Schneidvorrichtung ausgestattet sein.

Die Schneidvorrichtung ist dabei jeweils in einem vom Erntegut durchströmten Erntegutkanal der Ballenpresse, des Ladewagens oder sonstigen landwirtschaftlichen Maschine so angeordnet, dass das Erntegut auf eine in den Erntegutkanal hineinragende Anzahl feststehender Messer zu gefördert wird, um in Kontakt mit den Messerkanten geschnitten zu werden. Die Messer werden dabei von unten durch längliche Ausnehmungen ("Messerschlitze") in einem Bodenblech in den Erntegutkanal gestellt, d.h. sie ragen durch das Bodenblech hindurch in den Erntegutkanal hinein. Das Bodenblech begrenzt den Erntegutkanal dabei nach unten. Statt eines Bodenblechs kann es sich auch um ein vergleichbares anderes Gutleitelement handeln, durch das die Messer in den Erntegutkanal hineinragen.

Um die Messer insgesamt aus dem Wirkungsbereich des Erntegutkanals beispielsweise zur Wartung oder zum Austausch herauszubewegen, sind diese an einem Messerträger angeordnet, der zwischen einem Eingriffszustand (Schneidbetrieb) und einem Wartungszustand beweglich gelagert ist, in dem sämtliche Messer aus dem Erntegutkanal zurückgezogen sind. Der Messerträger ist hierzu beispielsweise schwenkbeweglich gegenüber einem Maschinenrahmen der Erntemaschine gelagert. Im Fall von Ballenpressen und Ladewagen wird die Förderung des Ernteguts im Wirkungsbereich der Messer insbesondere durch einen Rotor bewirkt, der sich um eine quer zur Gutstromrichtung liegende Achse dreht und in Axialrichtung mit einer Vielzahl von Rotorsternen ausgestattet ist. Die Rotorsterne sind in der Regel leicht verdreht zueinander auf der Achse montiert, um eine weitestgehend kontinuierliche Förderung des Ernteguts sowie gleichmäßige Belastung des zugehörigen Antriebsstrangs zu erzielen. Die Spitzen der Messer befinden sich jeweils zwischen zwei benachbarten Rotorsternen, so dass durch kämmenden Eingriff des Rotors mit den Messern die Zerkleinerung des Ernteguts erfolgt.

In Bezug auf den durchströmten Erntegutkanal weisen die Schneidvorrichtungen eine Vielzahl in Reihe nebeneinander angeordneter Messer auf, wobei die Anzahl nebeneinander in den Erntegutkanal ragender Messer die Anzahl wirksamer Schnittkanten und damit eine erzielbare Schnittlänge des Ernteguts vorgibt. Es ist allgemein wünschenswert, unterschiedliche Messeranzahlen verwenden zu können, um sich dem jeweiligen Einsatzzweck bzw. den Erntebedingungen anzupassen. Zum Schutz der Messer vor Beschädigungen durch Steine oder sonstige allgemein nicht zerkleinerbare Partikel und zur Ermöglichung einer Auswahl einer gewünschten Messeranzahl ist es üblich, die Messer derart beweglich gegenüber einem Messerträger der Schneidvorrichtung zu lagern, dass sich jedes Messer zwischen zumindest einer Betriebsposition und einer Außerbetriebsposition verstellen lässt. In der Außerbetriebsposition (auch: "deaktivierter Zustand") befindet sich das Messer in einer Stellung, in der es aus dem Erntegutkanal weitestgehend zurückgezogen ist, das Erntegut also nicht schneidet. Die Form der Messerschneide entspricht dabei zweckmäßigerweise etwa der Geometrie des Bodenblechs, um in der Außerbetriebsposition des Messers die längliche Ausnehmung ("Messerschlitz") im Bodenblech möglichst auszufüllen und annähernd flächenbündig zu verschließen. Die Schneidkante ist damit praktisch unwirksam und wird so auch nicht stumpf.

In der Betriebsposition (auch: "aktivierter Zustand") befindet sich das Messer dagegen in einer Stellung, in der es so in den Erntegutkanal hineinragt, dass vorbeiströmendes Erntegut in Zusammenwirkung mit dessen Schneidkante zerkleinert wird. Wenn sich ein Messer in der Betriebsposition befindet, liegt konstruktionsbedingt ein Teil der länglichen Ausnehmung ("Messerschlitz") hinter dem Messer frei, da der Messerrücken zur Erzielung einer Sicherheitsabschaltungsfunktion einen abfallenden Verlauf aufweisen muss. Dieser Bereich der Ausnehmung setzt sich während des Schneidbetriebs leicht mit Erntegut fest und muss regelmäßig manuell durch den Maschinenbediener gereinigt werden, um die Messer beweglich zu halten. Diese Reinigung, d.h. die Freihaltung der Messerschlitze von Verschmutzungen ist je nach Erntegutart sehr schwierig und zeitaufwändig, auch weil die Zugänglichkeit unter die Erntemaschine zumeist schwierig ist. Mit der steigenden Messerzahl heutiger Erntemaschinen vergrößert sich das Problem.

Aus dem Stand der Technik ist es als die Reinigung vereinfachende Maßnahme bekannt, den Messerschlitz im Bodenblech zu dessen Ende hin (bezogen auf die Gutstromrichtung durch den Erntegutkanal) größer auszuformen, um angesammeltes Erntegutmaterial einfacher entfernen zu können. Ein manueller Zugang zu der betroffenen Stelle ist dabei weiterhin erforderlich. Auch ist es bekannt, die vergrößerte Öffnung am Ende des Messerschlitzes während des Schneidens mittels einer Schiebemechanik geschlossen zu halten und nur zu Wartungszwecken freizugeben. Dies stellt eine technisch aufwändige Maßnahme dar. Treten dennoch Verschmutzungen auf, ist ein manuelles Reinigen weiterhin notwendig.Eine Ballenpresse gemäss dem Oberbegriff von Anspruch 1 ist aus US 6769239 bekannt. Vor diesem Hintergrund ist es eine Aufgabe der vorliegenden Erfindung, eine landwirtschaftliche Erntemaschine mit einer Schneidvorrichtung der genannten Art anzugeben, die sich auf vereinfachte Weise warten lässt, wobei insbesondere das Reinigen der Messerschlitze des Bodenblechs auf komfortablere Weise durchführbar sein soll.

Die genannte Aufgabe wird vorteilhaft gelöst durch eine landwirtschaftliche Erntemaschinen mit einer Schneidvorrichtung mit den Merkmalen des Anspruchs 1. Diese zeichnet sich dadurch aus, dass an dem Messerträger eine Gutklemmeinrichtung befestigt ist, die mit den länglichen Ausnehmungen im Gutleitelement korrespondierende, entgegen der Gutstromrichtung wirkende Klemmabschnitte aufweist. Erfindungsgemäß ist dabei zunächst gesehen worden, dass sich bei gattungsgemäßen Schneidvorrichtungen der Messerträger, an dem die Messer angeordnet sind, gegenüber dem den Erntegutkanal begrenzenden Gutleitelement (zumeist "Bodenblech") funktionsbedingt beweglich ist, um nämlich den Messerträger mit daran befestigten Messern aus einem Eingriffzustand in einen Wartungszustand bringen zu können. Erfindungsgemäß wird diese Beweglichkeit vorteilhaft genutzt, indem an dem Messerträger eine Gutklemmeinrichtung befestigt ist, die sich aufgrund deren Gestaltung zum Festhalten von Erntegutpartikeln eignet. Dazu weist die Gutklemmeinrichtung eine Vielzahl von Klemmabschnitten auf, die mit den länglichen Ausnehmungen im Gutleitelement korrespondieren, d.h. entsprechend der Anordnung der Ausnehmungen im Gutleitelement unter diesen liegend angeordnet sind. Ein jeder der Klemmabschnitte übt dabei entgegen der Gutstromrichtung eine klemmende Wirkung auf auftreffende Erntegutpartikel aus. Die erfindungsgemäße Wirkung dieser Maßnahme ist, dass Erntegutpartikel, die während des Schneidbetriebs in die länglichen Ausnehmungen des Gutleitelements eindringen, jeweils von einem korrespondierenden, insbesondere unterhalb der jeweiligen Ausnehmung befindlichen Klemmabschnitt der Gutklemmeinrichtung festgehalten (eingeklemmt) werden. Zur Durchführung einer Reinigung ist es dann lediglich erforderlich, den Messerträger mitsamt daran befestigter Gutklemmeinrichtung in den Wartungszustand, d.h. vom Erntegutkanal (und damit vom Gutleitelement) weg zu bewegen, wodurch von der Gutklemmeinrichtung festgehaltene Erntegutpartikel aus den Ausnehmungen des Gutleitelements herausgezogen werden. Ein manuelles Entfernen aus den Ausnehmungen ist damit nicht mehr erforderlich. Da der Messerträger im Wartungszustand leicht zugänglich ist, können die Erntegutpartikel von der Klemmeinrichtung anschließend leicht entfernt werden. Die genannte Aufgabe wird so mit einfachen Mitteln wirksam gelöst.

In vorteilhafter Weiterbildung der Erfindung werden die Klemmabschnitte durch sich in Gutstromrichtung verjüngende längliche Ausnehmungen an der Gutklemmeinrichtung gebildet, die zumindest in einem hinteren Bereich (bezogen auf die Gutstromrichtung) eine geringere Breite als eine jeweils korrespondierende Ausnehmung im Gutleitelement aufweisen. Mit anderen Worten könnte die Gutklemmeinrichtung dabei bildlich einem mit den Zinken gegen die Gutstromrichtung gerichteten Kamm gleichen, wobei die Zwischenräume zwischen den Zinken den sich in Gutstromrichtung verjüngenden länglichen Ausnehmungen entsprechen. Die Gutklemmeinrichtung ist zweckmäßigerweise dann so gegenüber dem Gutleitelement angeordnet, dass jeder der so gebildeten Klemmabschnitte von einer korrespondierenden Ausnehmung im Gutleitelement überdeckt wird. Durch die Ausnehmung tretende Erntegutpartikel gelangen so in den Wirkungsbereich des Klemmabschnitts, um dort festgehalten (eingeklemmt) zu werden. Verschiedene Geometrien der Klemmabschnitte sind denkbar, wobei gemäß einer besonders einfach zu fertigenden Ausführung ein Klemmabschnitt jeweils einen in Gutstromrichtung konischen Verlauf aufweist.

Zur Erzielung einer möglichst guten Wirksamkeit der Gutklemmeinrichtung befindet sich diese im Eingriffszustand des Messerträgers in Bezug auf den Erntegutkanal vorzugsweise unmittelbar hinter dem Gutleitelement. Handelt es sich bei dem Gutleitelement um ein den Erntegutkanal nach unten begrenzendes Bodenblech, so sollte die Gutklemmeinrichtung also unmittelbar unter dem Bodenblech angeordnet sein. Schwerkraftbedingt fallen Erntegutpartikel dann in den Wirkungsbereich der unter den Ausnehmungen im Bodenblech befindlichen Klemmabschnitte.

Zum Reinigen der im Gutleitelement ausgebildeten Ausnehmungen verbleibt vorzugsweise das Gutleitelement in einer den Erntegutkanal verschließenden Position, beispielsweise ist dieses darin arretierbar, während der Messerträger aus dem Eingriffszustand in den Wartungszustand bewegbar ist, so dass von der mit dem Messerträger bewegten Gutklemmeinrichtung festgehaltene Erntegutpartikel aus den Ausnehmungen des Gutleitelements entfernt, insbesondere aus diesen herausgezogen werden. Gemäß einer einfacheren Ausführung der Schneidvorrichtung kann das Gutleitelement auch fest in einer den Erntegutkanal verschließenden Position eingebaut sein. Durch die erfindungsgemäße Beweglichkeit des Messerträgers gegenüber dem Gutleitelement lassen sich die Erntegutpartikel jedenfalls aus den Ausnehmungen entfernen.

Eine vorteilhafte Weiterbildung der Schneidvorrichtung sieht vor, dass der Messerträger und das Gutleitelement um eine gemeinsame Schwenkachse relativ zueinander bewegbar (d.h. schwenkbar) sind. Durch eine solche Anordnung wird eine besondere Flexibilität hinsichtlich der Wartung und Reinigung der Schneidvorrichtung insgesamt erzielt. Vorteilhaft verläuft dabei die gemeinsame Schwenkachse quer zum Erntegutkanal. So ist gewährleistet, dass durch Schwenken des Gutleitelements bzw. des Messerträgers gewünschte Bauteile oder Maschinenbereiche jeweils über die volle Breite des Erntegutkanals zugänglich gemacht werden können.

Zweckmäßigerweise befindet sich die Schwenkachse in einem bezogen auf die Gutstromrichtung vorderen Bereich des Gutleitelements. Hierdurch ist gewährleistet, dass insbesondere bei überlastenden Gutansammlungen im Erntegutkanal ein einfaches oder ggf. sogar selbsttätiges Öffnen des Erntegutkanals möglich ist, um Störungen zu beseitigen oder um beispielsweise Zugriff auf den im Erntegutkanal befindlichen Rotor zu haben.

Eine vorteilhafte Weiterbildung der Schneidvorrichtung sieht vor, dass der Messerträger mittels eines Tragrahmens beabstandet zu der Schwenkachse gelagert ist. Ein solcher Tragrahmen kann beispielsweise sich seitlich des Erntegutkanals erstreckende Tragarme umfassen, die den Messerträger halten.

Eine besonders komfortable Verstellbarkeit des Messerträgers aus dem Eingriffszustand in den Wartungszustand (und umgekehrt) ergibt sich, indem der Tragrahmen mittels einer geeigneten Aktorik, vorzugsweise mittels paarweise zwischen einem Maschinenrahmen der Erntemaschine und dem Tragrahmen wirkenden hydraulischen Stellzylindern, aus dem Eingriffszustand in den Wartungszustand und umgekehrt verschwenkbar ist.

Zur Erleichterung des Zugriffs auf den Messerträger kann dieser weiterhin in seitliche Richtung verschiebbar gegenüber dem Tragrahmen gelagert sein, so dass dieser aus einer bezogen auf den Erntegutkanal mittigen Position in davon seitliche Positionen bewegbar ist. Eine Reinigung der Gutklemmeinrichtung ist so besonders einfach möglich. Eine besonders gute Zugänglichkeit wird geschaffen, indem der Messerträger beidseitig verschiebbar ausgeführt ist, wobei dieser in seitlichen Positionen jeweils zumindest zur Hälfte aus dem Erntegutkanal hinausragt.

Die Erfindung wird im Folgenden unter Hinweis auf die beigefügten Figuren näher erläutert. Daraus ergeben sich auch weitere Einzelheiten und Vorteile der Erfindung. Es zeigen:
- Fig. 1: eine Ballenpresse in schematischer Seitenansicht,
- Fig. 2: eine Schneidvorrichtung einer Ballenpresse in perspektivischer Ansicht mit Messerträger im Eingriffszustand,
- Fig. 3: die Schneidvorrichtung der Fig. 2 mit Messerträger im Wartungszustand,
- Fig. 4: die Schneidvorrichtung der Fig. 3, wobei der Messerträger zusätzlich in eine linke Position (bezogen auf die Vorwärtsrichtung) bewegt wurde,
- Fig. 5: den Messerträger der Schneidvorrichtung der Fig. 2 bis 4 in Ansicht von vorn,
- Fig. 6 bis 8: verschiedene Gestaltungsformen für eine Ausnehmung im Gutleitelement und einen korrespondierenden Klemmabschnitt der Gutklemmeinrichtung.

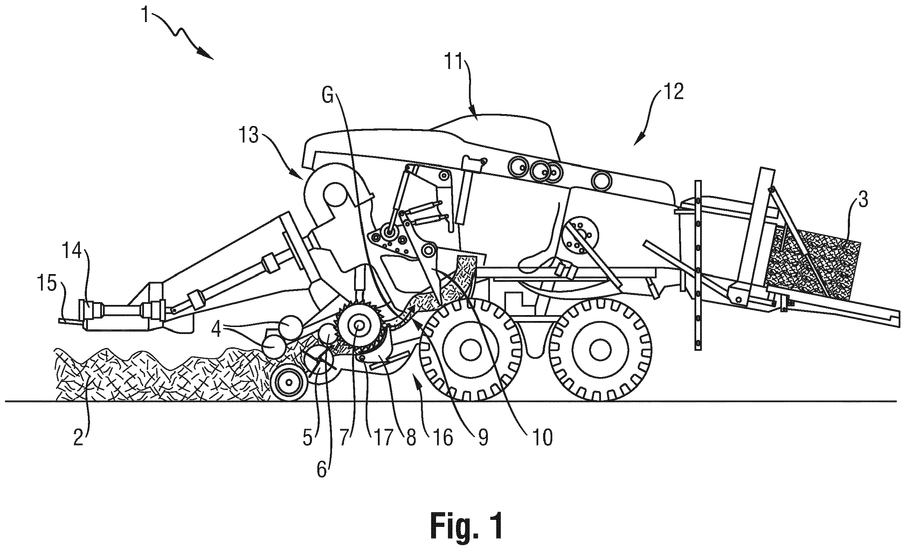

Fig. 1 zeigt eine Ballenpresse 1 in Form einer Quaderballenpresse bei der Erntefahrt in schematischer Seitenansicht. Im Erntebetrieb nimmt die Ballenpresse 1 auf dem Feldboden liegendes Erntegut 2, beispielsweise zum Schwad gelegtes Stroh auf und verarbeitet dieses zu quaderförmig gepressten und mit Bindegarn verschnürten Ballen 3, die nach Fertigstellung heckseitig aus der Ballenpresse 1 ausgeworfen werden.

Dazu nimmt die Ballenpresse 1 das Erntegut 2 mittels einer mit Zinken besetzten rotierenden Aufsammeltrommel 5 vom Boden auf, um es in Zusammenwirkung mit zwei darüberliegenden Niederhalterollen 4 den weiteren Förder- und Verarbeitungseinrichtungen der Ballenpresse 1 zuzuführen. Als nächstes wird das Erntegut 2 von einem Förderorgan 6, beispielsweise einer Querförderschnecke, von einer ursprünglichen Aufnahmebreite der Aufsammeltrommel 5 auf eine geringere Breite des Zuführkanals 9 zusammengeführt und mittels auf dem Förderorgan 6 mittig angeordneter Förderpaddel (nicht dargestellt) zu einem nachgelagerten (Schneid-) Rotor 7 gefördert. Der Rotor 7 weist über dessen Breite eine Vielzahl von zueinander beabstandeten Rotorsternen auf. Die Rotorsterne sind beispielsweise wendelförmig auf dem Rotor 7 angeordnet, um eine gleichmäßige Förderwirkung sowie eine gleichmäßige Belastung des zugehörigen Antriebsstrangs zu erzielen.

Unterhalb des Rotors 7 ist eine schematisch dargestellte Schneidvorrichtung 16 angeordnet. Die Schneidvorrichtung 16 weist im Wesentlichen eine Vielzahl von Messern 8 auf, die in Bezug auf den Zuführkanal 9 quer zu einer Gutstromrichtung G des Ernteguts 2 nebeneinander angeordnet sind. Demzufolge ist nur ein in der Zeichnungsansicht vorderes (in Fahrtrichtung der Presse 1 gesehen linkes) Messer 8 der Schneidvorrichtung 16 zu sehen, das - wie auch die übrigen Messer 8 - um eine quer zur Gutstromrichtung G verlaufende Messerachse 17 verschwenkbar ist. Jedes Messer 8 ist so zwischen einer Außerbetriebsposition, in der es nicht in den Erntegutkanal hineinragt, und einer Betriebsposition verschwenkbar, in der es in den Erntegutkanal hineinragt. Befindet sich ein Messer 8 (bzw. eine Vielzahl oder sämtliche der Messer 8) in der Betriebsposition, so wird das den Zuführkanal 9 durchströmende Erntegut 2 durch kämmende Zusammenwirkung von Rotor 7 (dessen Rotorsternen) und dem jeweiligen Messer 8 zerkleinert, insbesondere geschnitten.

Nach Passieren der Schneidvorrichtung 16 wird das Erntegut 2 von einem Sammelhübe durchführenden Raffer 10 gesammelt, der dann portionsweise eine darüberliegende Presskammer 11 befüllt. Nach dem dort stattfindenden Pressvorgang dient eine Knoteinrichtung 12 dazu, den gepressten Ballen 3 mit Bindegarn zu verschnüren, um diesen fertig zu stellen. Heckseitig der Ballenpresse 1 erfolgt anschließend der Ballenabwurf.

Frontseitig der Ballenpresse 1 befindet sich eine Zugdeichsel 15, mit der die Ballenpresse 1 von einem Zugfahrzeug wie einem Traktor (nicht dargestellt) gezogen und von diesem angetrieben wird. Zum Antrieb der Förder- und Verarbeitungseinrichtungen der Ballenpresse 1 dient eine mit dem Traktor koppelbare Hauptantriebswelle 14, die in ein Hauptgetriebe 13 mündet.

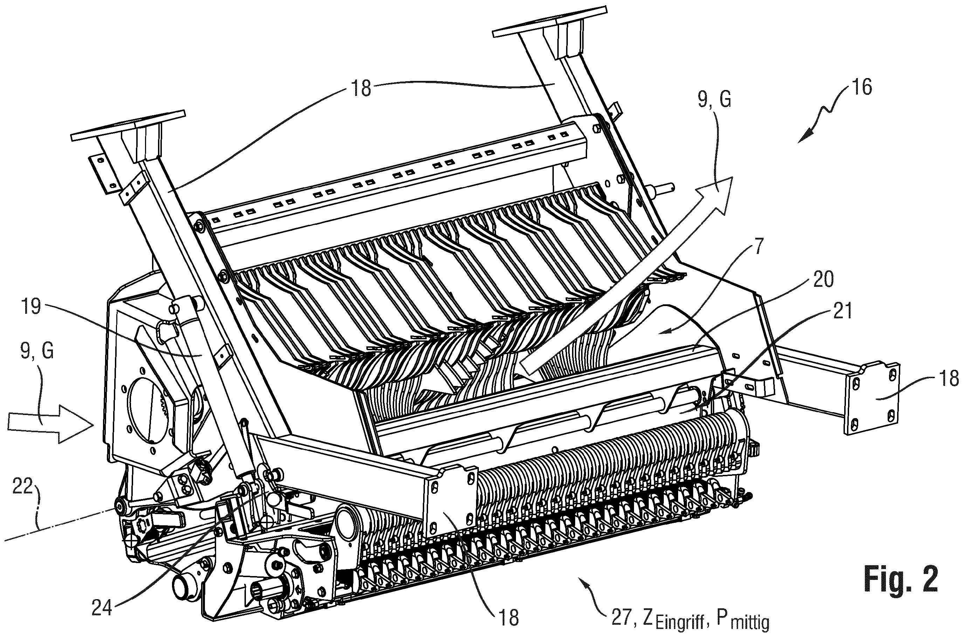

Die Fig. 2 bis 4 zeigen nun im Detail eine Schneidvorrichtung 16, die in eine Ballenpresse 1 gemäß Fig. 1 eingebaut sein kann, in verschiedenen Zuständen in perspektivischer Ansicht. Dabei zeigt zunächst Fig. 2 eine Schneidvorrichtung 16, deren Tragrahmen 21 geschlossen ist, so dass sich ein davon gehaltener Messerträger 27 für den Schneidbetrieb im Eingriffszustand (Z_{Eingriff}) befindet. Die Schneidvorrichtung 16 wird von einem Maschinenrahmen 18 getragen, der im gezeigten Ausführungsbeispiel beidseitig eines Rotors 7 angeordnete, in einem stumpfen Winkel miteinander verschweißte Trägerelemente mit Rechteckprofil umfasst. Der Rotor 7 mit einer Vielzahl daran befestigter Rotorsterne (nicht einzeln bezeichnet) ist drehbar gegenüber dem Maschinenrahmen 18 gelagert.

Unmittelbar unterhalb des Rotors 7 erstreckt sich ein Gutleitelement in Form eines gebogenes Bodenblechs 20, das einen Erntegutkanal 9 (angedeutet durch die ein- und austretenden Pfeile 9, die auch die Gutstromrichtung G durch die Schneidvorrichtung angeben) über dessen gesamte Breite nach unten begrenzt. Das Bodenblech 20 ist um eine quer zum Erntegutkanal 9 verlaufende Schwenkachse 22 schwenkbar gegenüber dem Maschinenrahmen 18 gelagert. In dem Bodenblech 20 sind über dessen Breite eine Vielzahl schlitzartiger Ausnehmungen 28 ausgebildet (in Fig. 2 aufgrund des Eingriffszustands Z_{Eingriff} des Messerträgers 27 verdeckt), durch welche eine Anzahl ausgewählter ("aktivierter") Messer 8 (in Fig. 2 ebenfalls verdeckt) in den Erntegutkanal 9 hineinragt. Die Schneidvorrichtung 16 befindet sich damit im Schneidbetriebszustand.

Zusätzlich zum Bodenblech 20 ist ein Tragrahmen 21 um die quer zum Erntegutkanal 9 verlaufende Schwenkachse 22 schwenkbar gegenüber dem Maschinenrahmen 18 gelagert. Der Tragrahmen 21 hält den sich darunter befindlichen Messerträger 27, an dem eine Vielzahl von Messern 8 (in Fig. 2 verdeckt) in Bezug auf den Erntegutkanal 9 in Reihe nebeneinander angeordnet sind. Aufgrund der Verschwenkbarkeit des Tragrahmens 21 um die Schwenkachse 22 ist auch der davon getragene Messerträger 27 um die Schwenkachse 22 verschwenkbar.

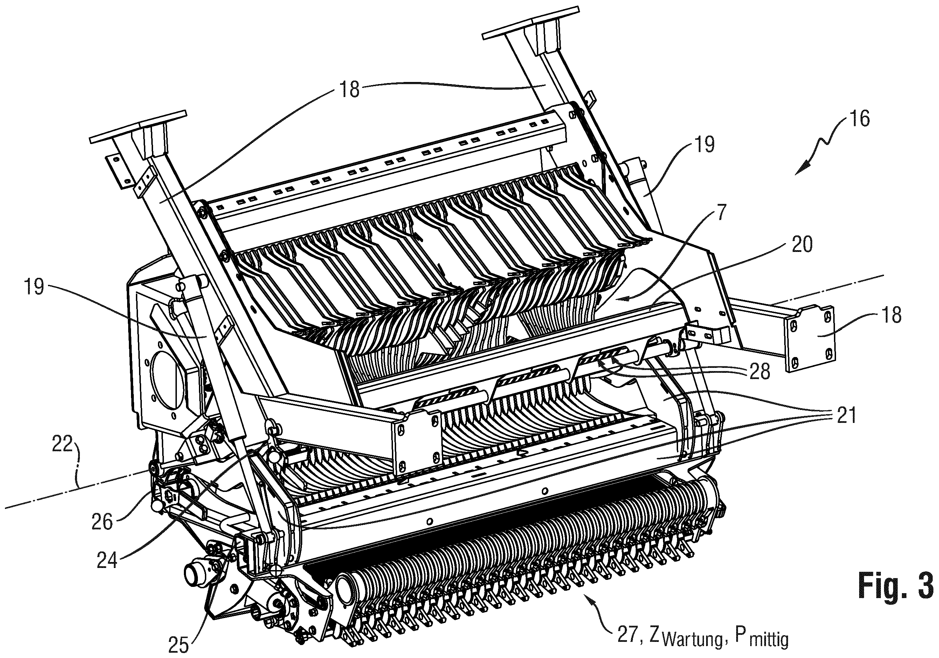

Zur Betätigung des Tragrahmens 21 dienen zwei beidseitig des Erntegutkanals 9 angeordnete hydraulische Stellzylinder 19 (in der perspektivischen Ansicht der Fig. 2 ist nur der linke Stellzylinder 19 sichtbar). Das Paar von Stellzylindern 19 wirkt zwischen dem Maschinenrahmen 18 und dem Tragrahmen 21 im Sinne einer Aktorik, um den Messerträger 27 aus dem in Fig. 2 dargestellten Eingriffszustand Z_{Eingriff} , in dem der Messerträger 27 seitlich von Seitenwänden des Erntegutkanals 9 eingeschlossen ist, in einen in Fig. 3 dargestellten Wartungszustand Z_{Wartung} verschwenken zu können, in dem der Messerträger 27 von oben zugänglich ist und, wie noch zu erläutern, in seitliche Positionen bewegbar ist.

Dementsprechend zeigt Fig. 3 die Schneidvorrichtung 16 bei geöffnetem Tragrahmen 21 und damit im Wartungszustand Z_{Wartung} des Messerträgers 27 in perspektivischer Ansicht. Die Stellzylinder 19 sind im Unterschied zu Fig. 2 ausgefahren, so dass der Tragrahmen 21 mitsamt daran befestigtem Messerträger 27 gegenüber dem Erntegutkanal 9 (im Vergleich zu Fig. 2) abgesenkt ist. Das Bodenblech 20 befindet sich jedoch in der gleichen Position wie in Fig. 2, ist nämlich mittels eines Feststellhebels 24 gegenüber dem Maschinenrahmen 18 arretiert. In dem in Fig. 3 gezeigten Wartungszustand Z_{Wartung} des Messerträgers 27 ist demnach ein zwischen dem abgesenkten Messerträger 27 und dem Bodenblech 20 befindlicher Bereich freigegeben.

In den Fig. 2 und 3 befindet sich der Messerträger 27 jeweils in einer mittigen Position P_{mittig} bezogen auf den Erntegutkanal 9, d.h. der Messerträger 27 ist zentral zwischen den Stellzylindern 19 angeordnet. Im gezeigten Ausführungsbeispiel ist der Messerträger 27 zudem in einer sich quer zum Erntegutkanal 9 erstreckenden Richtung linear beweglich gelagert, so dass sich dieser aus der in den Fig. 2 und 3 gezeigten mittigen Position P_{mittig} beidseitig in jeweils davon seitliche Positionen bewegen kann, in denen der Messerträger 27 jeweils zumindest zur Hälfte aus dem Erntegutkanal 9 hinausragt.

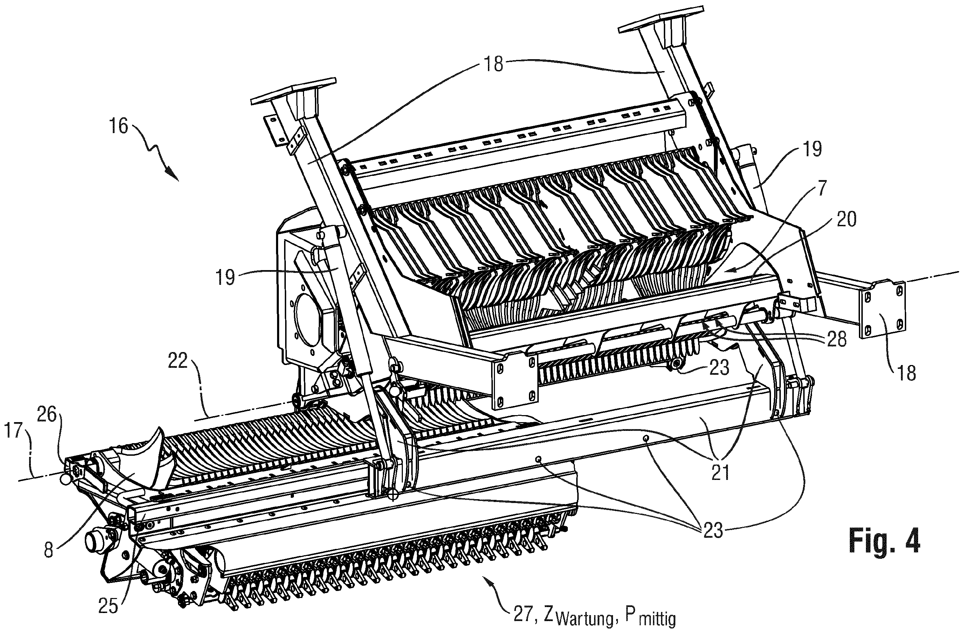

Dementsprechend zeigt Fig. 4 die Schneidvorrichtung 16, wobei der sich im Wartungszustand Z_{Wartung} befindliche Messerträger 27 aus der mittigen Position P_{mittig} der Fig. 3 in eine linke Position Pₗᵢₙₖₛ verschoben wurde. Eine entsprechende Verschiebung in eine (nicht dargestellte) rechte Position P_{rechts}, d.h. nach rechts aus dem Erntegutkanal 9 hinausragend, ist auf gleiche Weise möglich.

Wie Fig. 4 zeigt, ist dazu der Messerträger 27 im Sinne einer Schublade ausgebildet, die gegenüber dem haltenden Tragrahmen 21 seitlich verschiebbar gelagert ist. Am Tragrahmen 21, der im Wesentlichen zwei seitliche Arme und zumindest eine diese verbindende Querstrebe umfasst, sind dazu mehrere über die Breite des Erntegutkanals 9 angeordnete Tragrollen 23 angeordnet. Wie in Fig. 4 angedeutet, sind an einer hinteren Querstrebe des Tragrahmens 21 in gleichmäßigen Abständen vier Tragrollen 23 angeordnet. Der Messerträger 27, an dem eine Vielzahl von um eine Messerachse 17 schwenkbaren Messern 8 in Reihe nebeneinander angeordnet ist, weist jeweils eine quer zum Erntegutkanal 9 verlaufende vordere Schiene 26 und eine quer zum Erntegutkanal 9 verlaufende hintere Schiene 25 auf. Die hintere Schiene 25 und die vordere Schiene 26 werden von den Tragrollen 23 des Tragrahmens 21 derart auf einer quer zum Erntegutkanal 9 verlaufenden Führungsbahn gehalten, dass sich der gesamte Messerträger 27 - bei geöffnetem Tragrahmen 21 - aus der mittigen Position P_{mittig} gemäß Fig. 3 in die linke Position Pₗᵢₙₖₛ gemäß Fig. 4, oder in eine rechte Position bewegen lässt. In beiden Positionen Pₗᵢₙₖₛ bzw. P_{rechts} ragt der Messerträger 27 jeweils zu etwa 60% seiner Breite aus dem Erntegutkanal 9 seitlich hinaus.

Durch Einnahme der beiden Positionen Pₗᵢₙₖₛ bzw. P_{rechts} lassen sich demnach sämtliche Messer 8 bequem erreichen, um diese beispielsweise auszutauschen, zu reinigen oder um sich zum Zweck der Reinigung des Messerträgers 27 (insbesondere der Gutklemmeinrichtung 30, wie noch zu erläutern) Zugang zum Messerträger 27 zu verschaffen. Aufgrund der gleichmäßigen Anordnung der vier Tragrollen 23 wird die hintere Schiene 25 auch in den seitlichen Positionen Pₗᵢₙₖₛ bzw. P_{rechts} des Messerträgers 27 von jeweils zumindest zwei der Tragrollen 23 kontaktiert. So ist auch in den voll ausgefahrenen Positionen Pₗᵢₙₖₛ bzw. P_{rechts} ein sicherer Halt des Messerträgers 27 im Tragrahmen 21 gewährleistet. Da sich die Tragrollen 23 jeweils unterhalb der vorderen bzw. hinteren Schiene 26 bzw. 25 befinden, ist zudem gewährleistet, dass durch den Schneidvorgang anfallende Partikel, die beispielsweise durch die im Bodenblech 20 ausgebildeten schlitzartigen Ausnehmungen fallen, nicht mit den linearen Führungsmitteln, insbesondere den Tragrollen 23 sowie den damit zusammenwirkenden Schienen 25, 26 in Kontakt geraten und diese verunreinigen.

Im gezeigten Ausführungsbeispiel gemäß den Fig. 2 bis 4 ist ein den Erntegutkanal 9 nach unten begrenzendes Gutleitelement in Form eines sich über die gesamte Breite des Erntegutkanals 9 erstreckenden, leicht gebogenen Bodenblechs 20 ausgebildet. Das Bodenblech 20 ist - wie der Tragrahmen 21 mit dem Messerträger 27 - um die Schwenkachse 22 drehbar gelagert. Wie den Fig. 3 und 4 zu entnehmen, sind im Bodenblech 20 sich in Gutstromrichtung erstreckende, längliche Ausnehmungen 28 (sogenannte "Messerschlitze") ausgebildet. Im Eingriffszustand des Messerträgers (Fig. 2) ragen ausgewählte (aktivierte) Messer 8 des Messerträgers 27 durch diese schlitzartigen Ausnehmungen 28 von unten in den Erntegutkanal 9 hinein, so dass deren Schneidkanten - in Zusammenwirkung mit dem fördernden Rotor 7 - zum Zerkleinern von Erntegut dienen. In Fig. 4 sind beispielhaft ein linkes und ein daneben befindliches Messer 8 aus dem Messerträger 27 hervorragend dargestellt (aktivierter Zustand), während die übrigen Messer 8 zurückgezogen (deaktiviert) sind.

Aufgrund der zur Sicherheitsabschaltung der Messer 8 notwendigen abfallenden Form des Messerrückens bildet sich hinter jedem aktivierten Messer 8 im hinteren Bereich der zugehörigen länglichen Ausnehmung 28 im Bodenblech 20 ein offener Bereich. Im Schneidbetrieb (vgl. Fig. 2) können durch den Erntegutkanal 9 strömende Erntegutpartikel in diesen offenen Bereich der länglichen Ausnehmung 28 eines aktivierten Messers 8 eindringen und sich dort festsetzen.

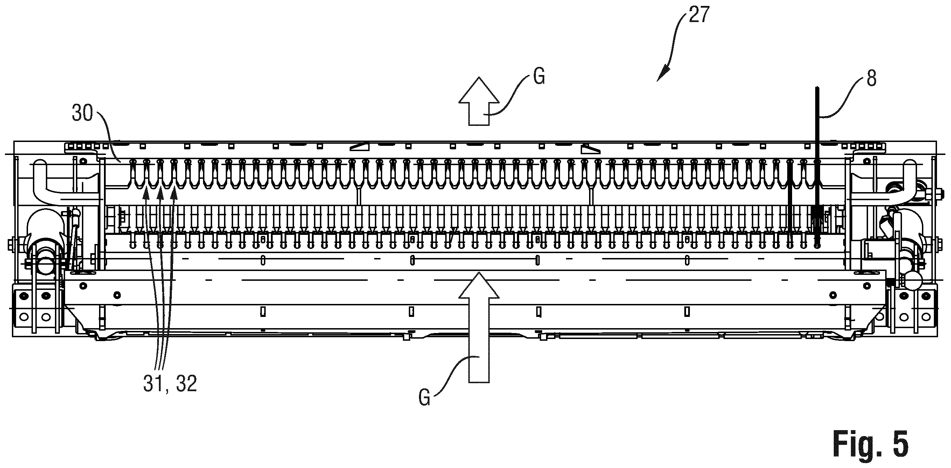

Zur vereinfachten Reinigung insbesondere der genannten hinteren Bereiche der Ausnehmungen 28 im Bodenblech 20 ist erfindungsgemäß dem Messerträger 27 eine Gutklemmeinrichtung 30 zugeordnet, die mit Hilfe der Fig. 5 bis 8 näher beschrieben wird.

Fig. 5 zeigt dazu den Messerträger 27 der Fig. 2 bis 4 in Ansicht von vorn. Nur im rechten Bildbereich (d.h. bezogen auf die Vorwärtsrichtung der Ballenpresse 1 also auf der linken Seite der Maschine) ist ein Messer 8 im aktivierten Zustand gezeigt. Der Messerträger 27 weist eine daran befestigte Klemmeinrichtung 30 auf, die im Wesentlichen aus einem Blechelement besteht, in das eine Vielzahl von Klemmabschnitten 31 in Form von sich in Gutstromrichtung G verjüngenden länglichen Ausnehmungen 32 eingearbeitet sind. Die Klemmeinrichtung 30 weist demnach eine kammartige Form auf, wobei die Zwischenräume zwischen den Zinken des Kamms jeweils einen Klemmabschnitt 31 bilden. Jeder der Klemmabschnitte 31 korrespondiert im Eingriffszustand Z_{Eingriff} des Messerträgers 27 mit einer länglichen Ausnehmung 28 im Bodenblech 20, d.h. liegt unterhalb dieser Ausnehmung 28. Da jeder Klemmabschnitt 31 zumindest in einem - bezogen auf die Gutstromrichtung G - hinteren Bereich (in der Darstellung von Fig. 5 oben liegend) eine geringere Breite als die jeweils korrespondierende Ausnehmung 28 im Bodenblech 20 aufweist, werden in Gutstromrichtung G auftreffende Erntegutpartikel in dem Klemmabschnitt 31 festgehalten.

Wird nun der Messerträger 27, in dessen Gutklemmeinrichtung 30 sich während des Schneidbetriebs Erntegutpartikel festgeklemmt haben, vom Eingriffszustand Z_{Eingriff} (vgl. Fig. 2) in den Wartungszustand Z_{Wartung} (vgl. Fig. 3) bewegt, so nimmt die Gutklemmeinrichtung 30 die Erntegutpartikel mit und zieht diese aus den Ausnehmungen 28 (Messerschlitzen) des darüber befindlichen Bodenblechs 20 heraus, das auf diese Weise von Erntegutpartikeln befreit wird.

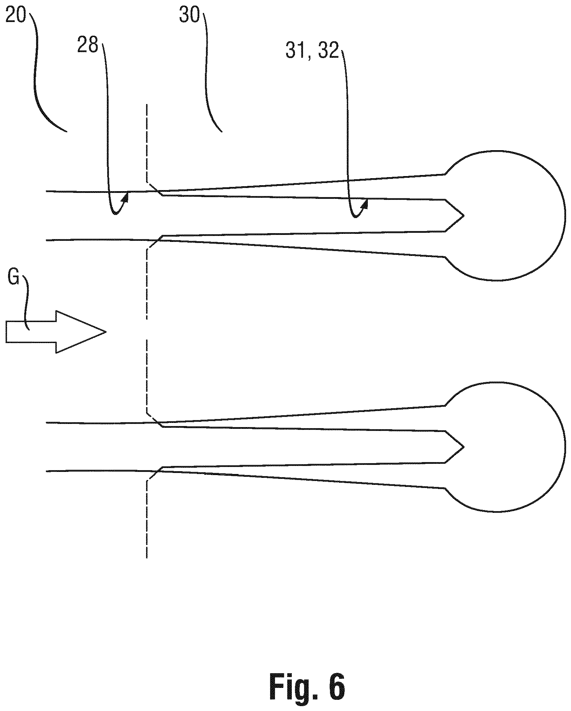

Die Fig. 6 bis 8 zeigen in schematischer Draufsicht (von oben, d.h. vom Erntgutkanal 9 aus) verschiedene vorteilhafte Formen für die Klemmabschnitte 31 der Gutklemmeinrichtung 30 im Vergleich zu sich damit überdeckenden Bereichen der länglichen Ausnehmungen 28 im Bodenblech 20. Die Gutstromrichtung G ist jeweils durch einen Pfeil angedeutet.

Gemäß dem Beispiel in Fig. 6 läuft die Ausnehmung 28 ("Messerschlitz") im Bodenblech 20 nach hinten konisch auseinander. Das Ende der Ausnehmung 28 ist mit einem vergrößerten Rundausschnitt ausgeführt. Die darunter liegende Gutklemmeinrichtung 30 weist demgegenüber schlitzartige, durch Ausnehmungen 32 gebildete Klemmabschnitte 31 auf, die in einem vorderen Bereich einen nach vorn geöffneten Ausschnitt aufweisen, der jedoch etwas schmaler als der Messerschlitz im Bodenblech 20 ist, wobei die Klemmabschnitte 31 nach hinten konisch zulaufen, um eindringendes Material festzuklemmen.

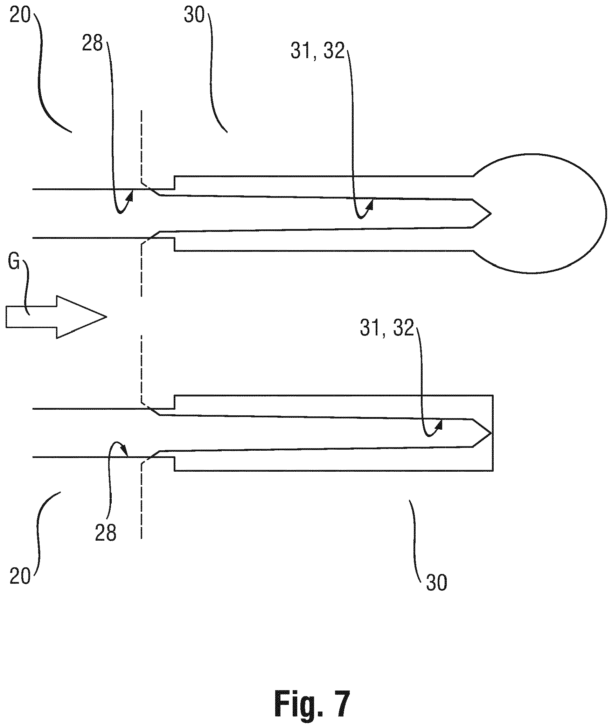

Gemäß dem oberen Beispiel in Fig. 7 verläuft die Ausnehmung 28 ("Messerschlitz") im Bodenblech 20 parallel, jedoch im hinteren Bereich mit größerem Abstand als im vorderen Bereich, wobei das Ende der Ausnehmung 28 mit einem vergrößerten Rundausschnitt zur vereinfachten Reinigung ausgeführt ist. Die darunter liegende Gutklemmeinrichtung 30 weist demgegenüber schlitzartige, durch Ausnehmungen 32 gebildete Klemmabschnitte 31 auf, die in einem vorderen Bereich einen nach vorn geöffneten Ausschnitt aufweisen, der jedoch etwas schmaler als der Messerschlitz im Bodenblech 20 ist, wobei die Klemmabschnitte 31 nach hinten konisch zulaufen, um eindringendes Material festzuklemmen. Das untere Beispiel der Fig. 7 unterscheidet sich vom oberen Beispiel im fehlenden Rundausschnitt.

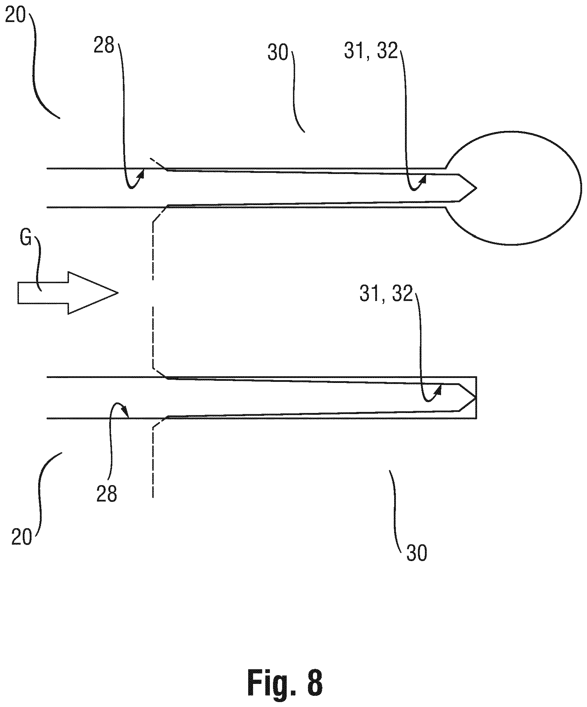

Gemäß dem oberen Beispiel in Fig. 8 verläuft die Ausnehmung 28 ("Messerschlitz") im Bodenblech 20 mit gleichem Abstand parallel, wodurch eine einfache Herstellbarkeit und ein geringer Platzbedarf (bei hoher Messerzahl) gewährleistet ist. Das Ende der Ausnehmung 28 ist mit einem vergrößerten Rundausschnitt zur vereinfachten Reinigung ausgeführt. Die darunter liegende Gutklemmeinrichtung 30 weist demgegenüber schlitzartige, durch Ausnehmungen 32 gebildete Klemmabschnitte 31 auf, die in einem vorderen Bereich einen nach vorn geöffneten Ausschnitt aufweisen, der jedoch etwas schmaler als der Messerschlitz im Bodenblech 20 ist, wobei die Klemmabschnitte 31 nach hinten konisch zulaufen, um eindringendes Material festzuklemmen. Das untere Beispiel der Fig. 8 unterscheidet sich vom oberen Beispiel im fehlenden Rundausschnitt, wodurch ein abermals verringerter Platzbedarf (z.B. vorteilhaft für hohe Messerzahlen) erreicht wird.

Die beschriebenen Formen der Ausnehmungen gemäß den Fig. 6 bis 8 können je nach Anwendung vorteilhaft eingesetzt werden.

**Bezugszeichenliste**

| | | | |
|---|---|---|---|
| 1 | Ballenpresse | 28 | Ausnehmung |
| 2 | Erntegut | 30 | Gutklemmeinrichtung |
| 3 | Ballen | 31 | Klemmabschnitt |
| 4 | Niederhalterollen | 32 | Ausnehmung |
| 5 | Aufsammeltrommel | | |
| 6 | Förderorgan | G | Gutstromrichtung |
| 7 | Rotor | *P_{mittig}* | *mittige Position* |
| 8 | Messer | *Pₗᵢₙₖₛ* | *linke Position* |
| 9 | Zuführkanal | *P_{rechts}* | *rechte Position* |
| 10 | Raffer | Z_{Eingriff} | Eingriffszustand |
| 11 | Presskammer | Z_{Wartung} | Wartungszustand |
| 12 | Knoteinrichtung | | |
| 13 | Hauptgetriebe | | |
| 14 | Hauptantriebswelle | | |
| 15 | Zugdeichsel | | |
| 16 | Schneidvorrichtung | | |
| 17 | Messerachse | | |
| 18 | Maschinenrahmen | | |
| 19 | Stellzylinder | | |
| 20 | Bodenblech | | |
| 21 | Tragrahmen | | |
| 22 | Schwenkachse | | |
| 23 | Tragrolle | | |
| 24 | Feststell hebel | | |
| 25 | hintere Schiene | | |
| 26 | vordere Schiene | | |
| 27 | Messerträger | | |

## Patentansprüche

1. Landwirtschaftliche Erntemaschine, insbesondere Ballenpresse (1) oder Ladewagen, mit einer Schneidvorrichtung (16), umfassend eine Vielzahl von Messern (8), die in Bezug auf einen von Erntegut (2) in einer Gutstromrichtung (G) durchströmten Erntegutkanal (9) in Reihe nebeneinander an einem Messerträger (27) angeordnet sind, wobei der Messerträger (27) gegenüber einem den Erntegutkanal (9) begrenzenden Gutleitelement (20) zwischen einem Eingriffszustand (Z_{Eingriff}), in dem ausgewählte Messer (8) durch längliche Ausnehmungen (28) im Gutleitelement (20) in den Erntegutkanal (9) hineinragen können, und einem Wartungszustand (Z_{Wartung}) beweglich ist, in dem die Messer (8) aus dem Erntegutkanal (9) zurückgezogen sind, **dadurch gekennzeichnet, dass** an dem Messerträger (27) eine Gutklemmeinrichtung (30) befestigt ist, die mit den länglichen Ausnehmungen (28) im Gutleitelement (20) korrespondierende, entgegen der Gutstromrichtung (G) wirkende Klemmabschnitte (31) aufweist.

2. Erntemaschine nach Anspruch 1, **dadurch gekennzeichnet, dass** die Klemmabschnitte (31) durch sich in Gutstromrichtung (G) verjüngende längliche Ausnehmungen (32) an der Gutklemmeinrichtung (30) gebildet werden, die zumindest in einem hinteren Bereich eine geringere Breite als eine jeweils korrespondierende Ausnehmung (28) im Gutleitelement (20) aufweisen.

3. Erntemaschine nach Anspruch 1 oder 2, **dadurch gekennzeichnet, dass** ein Klemmabschnitt (31) jeweils einen in Gutstromrichtung (G) konischen Verlauf aufweist.

4. Erntemaschine nach einem der Ansprüche 1 bis 3, **dadurch gekennzeichnet, dass** sich die Gutklemmeinrichtung (30) im Eingriffszustand (Z_{Eingriff}) des Messerträgers (27) in Bezug auf den Erntegutkanal (9) unmittelbar hinter dem Gutleitelement (20) befindet.

5. Erntemaschine nach einem der Ansprüche 1 bis 4, **dadurch gekennzeichnet, dass** zum Reinigen der im Gutleitelement (20) ausgebildeten Ausnehmungen (28) das Gutleitelement (20) in einer den Erntegutkanal (9) verschließenden Position (P_{geschlossen}) verbleibt, während der Messerträger (27) aus dem Eingriffszustand (Z_{Eingriff}) in den Wartungszustand (Z_{Wartung}) bewegbar ist, so dass von der mit dem Messerträger (27) bewegten Gutklemmeinrichtung (30) festgehaltene Erntegutpartikel aus den Ausnehmungen (28) des Gutleitelements (20) entfernt werden.

6. Erntemaschine nach einem der Ansprüche 1 bis 5, **dadurch gekennzeichnet, dass** der Messerträger (27) und das Gutleitelement (20) um eine gemeinsame Schwenkachse (22) relativ zueinander bewegbar sind.

7. Erntemaschine nach Anspruch 6, **dadurch gekennzeichnet, dass** die gemeinsame Schwenkachse (22) quer zum Erntegutkanal (9) verläuft.

8. Erntemaschine nach Anspruch 6 oder 7, **dadurch gekennzeichnet, dass** sich die Schwenkachse (22) in einem bezogen auf die Gutstromrichtung (G) vorderen Bereich des Gutleitelements (20) befindet.

9. Erntemaschinen nach einem der Ansprüche 1 bis 8, **dadurch gekennzeichnet, dass** es sich bei dem Gutleitelement um ein den Erntegutkanal (9) nach unten begrenzendes Bodenblech (20) handelt.

10. Erntemaschine nach einem der Ansprüche 6 bis 9, **dadurch gekennzeichnet, dass** der Messerträger (27) mittels eines Tragrahmens (21) beabstandet zu der Schwenkachse (22) gelagert ist.

11. Erntemaschine nach Anspruch 10, **dadurch gekennzeichnet, dass** der Tragrahmen (21) mittels einer geeigneten Aktorik, vorzugsweise mittels paarweise zwischen einem Maschinenrahmen (18) der Erntemaschine (1) und dem Tragrahmen (21) wirkenden hydraulischen Stellzylindern (19), aus dem Eingriffszustand (Z_{Eingriff}) in den Wartungszustand (Z_{Wartung}) und umgekehrt verschwenkbar ist.

## Claims

1. An agricultural harvester, in particular a bale press (1) or a loading vehicle, comprising a cutting device (16) including a plurality of blades (8) which are arranged on a blade carrier (27) in series in mutually juxtaposed relationship in relation to a crop material passage (9) through which crop material (2) passes in a material flow direction (G), wherein the blade carrier (27) is moveable with respect to a material guide element (20) delimiting the crop material passage (9) between an engagement condition (Z_{Eingriff}) in which selected blades (8) can project into the crop material passage (9) through elongate openings (28) in the material guide element (20) and a maintenance condition (Z_{Wartung}) in which the blades are retracted from the crop material passage (9),
**characterised in that** fixed to the blade carrier (27) is a material clamping device (30) having clamping portions (31) which correspond to the elongate openings (28) in the material guide element (20) and which act in opposite relationship to the material flow direction (G).

2. A harvester according to claim 1 **characterised in that** the clamping portions (31) are formed by elongate openings (32) narrowing in the material flow direction (G) at the material clamping device (30), which openings are of a smaller width at least in a rear region than a respectively corresponding opening (28) in the material guide element (20).

3. A harvester according to claim 1 or claim 2 **characterised in that** a clamping portion (31) is respectively of a configuration which is conical in the material flow direction (G).

4. A harvester according to one of claims 1 to 3 **characterised in that** the material clamping device (30) is disposed immediately downstream of the material guide element (20) in the engagement condition (Z_{Eingriff}) of the blade carrier (27) in relation to the crop material passage (9).

5. A harvester according to one of claims 1 to 4 **characterised in that** for cleaning the openings (28) in the material guide element (20) the material guide element (20) remains in a position (P_{geschlossen}) of closing the crop material passage (9) while the blade carrier (27) is moveable from the engagement condition (Z_{Eingriff}) into the maintenance condition (Z_{Wartung}) so that crop material particles retained by the material clamping device (30) which is moved with the blade carrier (27) are removed from the openings (28) in the material guide element (20).

6. A harvester according to one of claims 1 to 5 **characterised in that** the blade carrier (27) and the material guide element (20) are moveable relative to each other about a common pivot axis (22).

7. A harvester according to claim 6 **characterised in that** the common pivot axis (22) extends transversely relative to the crop material passage (9).

8. A harvester according to claim 6 or claim 7 **characterised in that** the pivot axis (22) is in a front region of the material guide element (20) with respect to the material flow direction (G).

9. A harvester according to one of claims 1 to 8 **characterised in that** the material guide element is a bottom plate (20) delimiting the crop material passage (9) downwardly.

10. A harvester according to one of claims 6 to 9 **characterised in that** the blade carrier (27) is mounted in spaced relationship with the pivot axis (22) by means of a carrier frame (21).

11. A harvester according to claim 10 **characterised in that** the carrier frame (21) is pivotable by means of a suitable actuator means, preferably by means of hydraulic actuating cylinders (19) acting pair-wise between a machine frame (18) of the harvester (1) and the carrier frame (21) from the engagement condition (Z_{Eingriff}) into the maintenance condition (Z_{Wartung}) and vice-versa.

## Revendications

1. Machine agricole de récolte, en particulier presse à balles (1) ou remorque autochargeuse, comprenant un dispositif de coupe (16) comportant une pluralité de couteaux (8) qui, par rapport à un canal de produit de récolte (9) parcouru par du produit de récolte (2) dans une direction de flux de produit (G), sont disposés en rang côte à côte sur un porte-couteaux (27), le porte-couteaux (27) étant déplaçable, par rapport à un élément de guidage de produit (20) délimitant le canal de produit de récolte (9), entre un état engagé (Z_{Eingriff}), dans lequel des couteaux sélectionnés (8) peuvent pénétrer dans le canal de produit de récolte (9) à travers des évidements allongés (28) ménagés dans l'élément de guidage de produit (20), et un état de maintenance (Z_{Wartung}), dans lequel les couteaux (8) sont sortis du canal de produit de récolte (9), **caractérisée en ce que** sur le porte-couteaux (27) est fixé un dispositif de retenue de produit (30) qui comporte des portions de retenue (31) correspondant aux évidements allongés (28) ménagés dans l'élément de guidage de produit (20) et agissant à l'encontre de la direction de flux de produit (G).

2. Machine de récolte selon la revendication 1, **caractérisée en ce que** les portions de retenue (31) sont formées par des évidements allongés (32) qui sont ménagés dans le dispositif de retenue de produit (30) et se rétrécissent dans la direction de flux de produit (G) et qui, au moins dans une zone arrière, présentent une largeur inférieure à un évidement correspondant (28) ménagé dans l'élément de guidage de produit (20).

3. Machine de récolte selon la revendication 1 ou 2, **caractérisée en ce que** chaque portion de retenue (31) présente un profil conique dans la direction de flux de produit (G).

4. Machine de récolte selon une des revendications 1 à 3, **caractérisée en ce que**, dans l'état engagé (Z_{Eingriff}) du porte-couteaux (27) par rapport au canal de produit de récolte (9), le dispositif de retenue de produit (30) se trouve juste derrière l'élément de guidage de produit (20).

5. Machine de récolte selon une des revendications 1 à 4, **caractérisée en ce que**, pour nettoyer les évidements (28) ménagés dans l'élément de guidage de produit (20), l'élément de guidage de produit (20) reste dans une position (P_{geschlossen}) fermant le canal de produit de récolte (9), tandis que le porte-couteaux (27) peut être déplacé de l'état engagé (Z_{Eingriff}) à l'état de maintenance (Z_{Wartung}), de façon que des particules de produit de récolte retenues par le dispositif de retenue de produit (30) déplacé avec le porte-couteaux (27) puissent être retirées des évidements (28) de l'élément de guidage de produit (20).

6. Machine de récolte selon une des revendications 1 à 5, **caractérisée en ce que** le porte-couteaux (27) et l'élément de guidage de produit (20) sont mobiles l'un par rapport à l'autre selon un axe de pivotement commun (22).

7. Machine de récolte selon la revendication 6, **caractérisée en ce que** l'axe de pivotement commun (22) s'étend transversalement au canal de produit de récolte (9).

8. Machine de récolte selon la revendication 6 ou 7, **caractérisée en ce que** l'axe de pivotement (22) se trouve dans une zone avant, par rapport à la direction de flux de produit (G), de l'élément de guidage de produit (20).

9. Machine de récolte selon une des revendications 1 à 8, **caractérisée en ce que** l'élément de guidage de produit est constitué par une tôle de fond (20) qui délimite le canal de produit de récolte (9) vers le bas.

10. Machine de récolte selon une des revendications 6 à 9, **caractérisée en ce que** le porte-couteaux (27) est monté à distance de l'axe de pivotement (22) au moyen d'un bâti porteur (21).

11. Machine de récolte selon la revendication 10, **caractérisée en ce que**, au moyen d'un ensemble actionneur approprié, de préférence au moyen de vérins hydrauliques de réglage (19) agissant par paires entre un bâti de machine (18) de la machine de récolte (1) et le bâti porteur (21), le bâti porteur (21) est déplaçable depuis l'état engagé (Z_{Eingriff}) vers l'état d'entretien (Z_{Wartung}) et inversement.
